# EUROPÄISCHE PATENTSCHRIFT

(11) **EP 3 953 595 B1**
(45) Veröffentlichungstag und Bekanntmachung des Hinweises auf die Patenterteilung: **17.01.2024**
(21) Anmeldenummer: 20714472.6
(22) Anmeldetag: 10.03.2020
(51) Int. Cl.: F16D 13/68, F16D 13/69

(54) **LAMELLENKUPPLUNG, INSBESONDERE TROCKENE LAMELLENKUPPLUNG, INSBESONDERE FÜR HYBRIDEN ANTRIEBSSTRANG**
MULTI-PLATE CLUTCH, IN PARTICULAR A DRY MULTI-PLATE CLUTCH, IN PARTICULAR FOR A HYBRID DRIVETRAIN
EMBRAYAGE MULTIDISQUE, EN PARTICULIER EMBRAYAGE MULTIDISQUE SEC, EN PARTICULIER POUR UNE CHAÎNE CINÉMATIQUE HYBRIDE

(30) Priorität: 10.04.2019 DE 102019109418; 14.05.2019 DE 102019112566
(43) Veröffentlichungstag der Anmeldung: 16.02.2022
(73) Patentinhaber: Schaeffler Technologies AG & Co. KG, 91074 Herzogenaurach (DE)
(72) Erfinder: DANNHÄUSER, Matthias, 69254 Malsch (DE); VOGEL, Florian, 77815 Bühl (DE); BASLER, Christian, 77654 Offenburg (DE); FINKENZELLER, Marc, 77723 Gengenbach (DE)
(86) Internationale Anmeldenummer: PCT/DE2020/100166
(87) Internationale Veröffentlichungsnummer: WO 2020/207524

(56) Entgegenhaltungen:
- DE-A1- 3 100 586
- DE-A1-102008 006 155
- DE-A1-102017 130 350
- DE-C1- 3 320 977

## Beschreibung

Die vorliegende Erfindung betrifft eine Lamellenkupplung, insbesondere eine trockene Lamellenkupplung, insbesondere für einen hybriden Antriebsstrang, sowie einen hybriden Antriebsstrang mit einer trockenen K0-Lamellenkupplung zum An- und Abkoppeln eines Verbrennungsmotors und/oder mit einer in den Rotor einer elektrischen Maschine, wie eines Elektromotors oder eines Generators, integrierten trockenen Lamellenkupplung.

Lamellenkupplungen sind in der Regel Mehrscheibenkupplungen, in denen die Lamellen in axialer Richtung frei beweglich gelagert sind. Beim Öffnen und Schließen der Kupplung werden sie innerhalb einer passenden Außen- oder Innenverzahnung axial verschoben. Neben der Verzahnung der Lamellen auf dem zugehörigen Lamellenträger sind sonst keine weiteren Zentrierungen oder Positionierungen der Lamellen vorhanden. In jedem Zahn besteht ein Flächenkontakt zwischen den beteiligten Bauteilen, so dass es (bedingt durch Toleranzen) leicht zu einer ungünstigen Positionierung bzw. Verklemmung kommen kann. Dies führt zu hohen Reibverlusten in der Kupplung. Zudem ist die Geometrie des Lamellenträger sehr komplex, was zu hohen Herstellkosten führt.

Aus der DE 10 2008 006 155 A1 ist eine Lamellenkupplung mit zumindest einer in radialer Richtung außen eingehängten und in axialer Richtung verschiebbaren Außenlamelle und zumindest einer in radialer Richtung innen eingehängten und in axialer Richtung verschiebbaren Innenlamelle bekannt, wobei die Außenlamelle über eine Mehrzahl im Außenumfang verteilt angeordneter Blattfedern drehmomentübertragend an einem Rotor-Topf eingehängt ist.

Es ist Aufgabe der vorliegenden Erfindung, eine Lamellenkupplung, insbesondere eine trockene Lamellenkupplung, sowie einen hybriden Antriebsstrang mit einer trockenen Lamellenkupplung mit geringen Reibverlusten und geringen Herstellkosten anzugeben.

Erfindungsgemäß gelöst wird diese Aufgabe durch eine Lamellenkupplung, insbesondere eine trockene Lamellenkupplung, und einen hybriden Antriebsstrang gemäß den unabhängigen Patentansprüchen. Bevorzugte Ausführungsbeispiele sind in den abhängigen Patentansprüchen dargelegt.

Die erfindungsgemäße Lamellenkupplung, insbesondere trockene Lamellenkupplung, insbesondere für einen hybriden Antriebsstrang insbesondere eines Kraftfahrzeuges, weist zumindest eine in radialer Richtung außen eingehängte und in axialer Richtung verschiebbare Außenlamelle und zumindest eine in radialer Richtung innen eingehängte und in axialer Richtung verschiebbare Innenlamelle auf, wobei die Außenlamelle über eine Mehrzahl im Außenumfang verteilt angeordneter Blattfedern drehmomentübertragend an einem Rotor-Topf eingehängt ist, und/oder wobei die Innenlamellen über eine Mehrzahl im Innenumfang verteilt angeordneter Blattfedern drehmomentübertragend an einem Mitnehmerkranz eingehängt ist.

Bevorzugt ist die mindestens eine Außenlamelle als Stahllamelle(n) und die mindestens eine Innenlamelle als Belaglamelle(n) ausgebildet.

Alternativ ist die mindestens eine Außenlamelle als Belaglamelle(n) und die mindestens eine Innenlamelle als Stahllamelle(n) ausgebildet.

Die Belaglamelle weist dabei in axialer Richtung auf mindestens einer Seite, bevorzugt auf beiden Seiten, Reiblamellen auf, also Reibflächen, die insbesondere mit benachbarten Stahllamellen in reibenden Eingriff gebracht werden. Bevorzugt ist dabei die Belaglamelle durch zwei Reiblamellen gebildet, die stoffschlüssig mit einem Trägerblech (Belagträger) verbunden sind, insbesondere verklebt. Ebenso bevorzugt ist auch eine Vernietung der Reiblamellen mit dem Belagträger bzw. Trägerblech.

Kerngedanke der Erfindung ist es, die axiale Bewegung der trockenen Lamellen beim Öffnen und Schließen der Kupplung reibungsfrei bzw. nahezu reibungsfrei zu realisieren. Dazu werden diese jeweils auf mindestens drei Blattfedern bzw.

Blattfederpaketen gelagert. Die Blattfederkraft/-steifigkeit ist dabei sehr klein anzustreben. Gleichzeitig muss jedoch eine ausreichende Übertragungssicherheit des anliegenden Momentes gegeben sein. Während der Momentenübertragung (also bei ganz oder fast vollständig geschlossener Kupplung) wird die Verschiebereibung größer als die axiale Blattfederkraft und die Blattfeder kann nicht mehr in ihrer Führung gleiten (= reiben). Die Lamelle kann sich jedoch aufgrund der entstehenden Blattfederdurchbiegung weiterhin axial bewegen.

Hierdurch wird die Reibung der Lamellen in axialer Richtung und werden damit die entstehenden Reibverluste der Lamellenkupplung reduziert.

Die Blattfedern sind einteilig mit einem Belagträger einer innen oder außen eingehängten Belaglamelle ausgebildet, indem beide in Umfangsrichtung voneinander beabstandeten Enden einer jeden Blattfeder in den Belagträger übergehen. Somit sind die Blattfedern als axiale Federelemente direkt in den Belagträger bzw. das Trägerblech integriert.

Gemäß einer vorteilhaften Ausgestaltung sind weitere der Blattfedern mit einer außen oder innen eingehängten Stahllamelle verbunden, vorzugsweise vernietet, indem beide in Umfangsrichtung voneinander beabstandeten Enden einer jeden Blattfeder mit der Stahllamelle verbunden, vorzugsweise vernietet, sind.

Hierdurch ist ein einfacher Aufbau einer Belaglamelle und/oder Stahllamelle möglich. Bevorzugt ist eine Ausgestaltung, bei der die Blattfedern an der Außenlamelle und/oder der Innenlamelle in Umfangsrichtung gleichmäßig verteilt sind.

Dies ermöglicht eine gleichmäßige Verteilung der entsprechenden Federkräfte der Blattfedern über den Umfang der Außenlamelle und/oder Innenlamelle, was das Risiko einer erhöhten Reibung bis hin zu einem möglichen Verklemmen der Außenlamellen und/oder der Innenlamellen weiter reduziert.

Besonders bevorzugt hat sich eine symmetrische Ausgestaltung von vorzugsweise mindestens drei Blattfedern pro Außenlamelle oder Innenlamelle herausgestellt, da dadurch eine gleichmäßige Verteilung der Federkräfte der Blattfedern in Umfangsrichtung erreicht werden kann und eine Unwucht vermieden werden kann. Bei Lamellenpaketen sind diese aus einer entsprechenden Zahl von identischen Außenlamellen oder Innenlamellen ausgebildet, so dass sich mindestens drei Blattfederpakete pro Lamellenpaket ausbilden.

Gemäß einer vorteilhaften Ausgestaltung ist ein Rotor-Träger zur Verbindung dem Rotor-Topf ausgebildet, der in radialer Richtung innen axiale Nuten aufweist, in die entsprechende Arme des Rotor-Topfes eingreifen.

Durch das Zusammenwirken von Nuten und Armen kann die Übertragung von Drehmoment zwischen Rotor-Topf und Rotor-Träger erfolgen. Eine Schweißverbindung zwischen Rotor-Topf und Rotor-Träger kann dadurch unterbleiben.

Besonders vorteilhaft ist in diesem Zusammenhang, dass die Arme des Rotor-Topfes zur Lagerung der Blattfedern der Außenlamellen dienen, wobei die Blattfedern zu den Armen korrespondierende Ausnehmungen aufweisen.

Dies ermöglicht eine einfache Montage und Demontage der entsprechenden Außenlamellen.

Weiterhin wird ein hybrider Antriebsstrang mit einer Lamellenkupplung nach der vorliegenden Erfindung vorgeschlagen, die als K0-Kupplung zum An- und Abkoppeln eines Verbrennungsmotors ausgebildet ist, und/oder die in den Rotor einer elektrischen Maschine, wie eines Elektromotors oder eines Generators, integriert ist.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: ein Beispiel eines Aufbaus einer Lamellenkupplung;
- Fig. 2:: ein Beispiel eines Aufbaus einer Stahllamelle;
- Fig. 3: ein Beispiel eines Aufbaus einer Belaglamelle;
- Fig. 4: eine weitere Ansicht des Beispiels einer Lamellenkupplung; und
- Fig. 5: eine erste perspektivische Ansicht der montierten Lamellenkupplung;
- Fig. 6: eine zweite perspektivische Ansicht der montierten Lamellenkupplung;
- Fig. 7: eine dritte perspektivische Ansicht der montierten Lamellenkupplung; und
- Fig. 8: einen hybriden Antriebsstrang eines Kraftfahrzeugs.

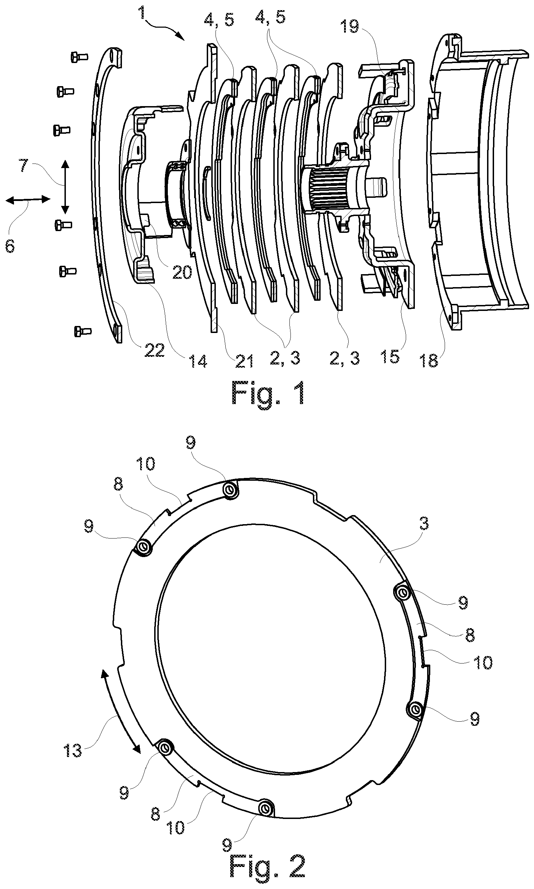

Fig. 1 zeigt exemplarisch und schematisch den Aufbau einer Lamellenkupplung 1, die insbesondere als trockene Lamellenkupplung 1 ausgebildet ist. Diese umfasst unter anderem eine Mehrzahl von Außenlamellen 2, die hier als Stahllamellen 3 ausgeführt sind und eine entsprechende Mehrzahl von Innenlamellen 4, die hier als Belaglamellen 5 ausgebildet sind. Die Lamellenkupplung 1 weist eine axiale Richtung 6 und eine radiale Richtung 7 auf. Die Außenlamellen 2 sind in radialer Richtung 7 außen eingehängt und in axialer Richtung 6 verschiebbar. Die Innenlamellen 4 sind in radialer Richtung 7 innen eingehängt und in axialer Richtung 6 verschiebbar. Durch die Verlagerung der Innenlamellen 4 und der Außenlamellen 2 relativ zu einander in axialer Richtung 6 können in axialer Richtung 6 benachbarte Innenlamellen 4 und Außenlamellen 2 in Reibschluss miteinander gebracht werden, so dass Drehmoment von den Innenlamellen 4 zu den Außenlamellen 2 und umgekehrt übertragen werden kann.

Fig. 2 zeigt ein Beispiel einer als Außenlamelle 2 einsetzbaren Stahllamelle 3. Diese weist drei Blattfedern 8 auf, die in Umfangsrichtung gleichmäßig verteilt sind, also so ausgebildet sind, dass jeweils benachbarte Blattfedern 8 gleiche Winkel miteinander einschließen. Die Blattfedern 8 sind aus einem Federstahl ausgebildet und werden über Hohlniete 9 mit der Stahllamelle 3 verbunden. Beide in einer Umfangsrichtung 13 voneinander beabstandeten Enden einer jeden Blattfeder 8 sind mit der Stahllamelle 3 durch die Hohlnieten 9 verbunden. Jede Blattfeder 8 weist eine Ausnehmung 10 auf, deren Funktion weiter unten erläutert wird.

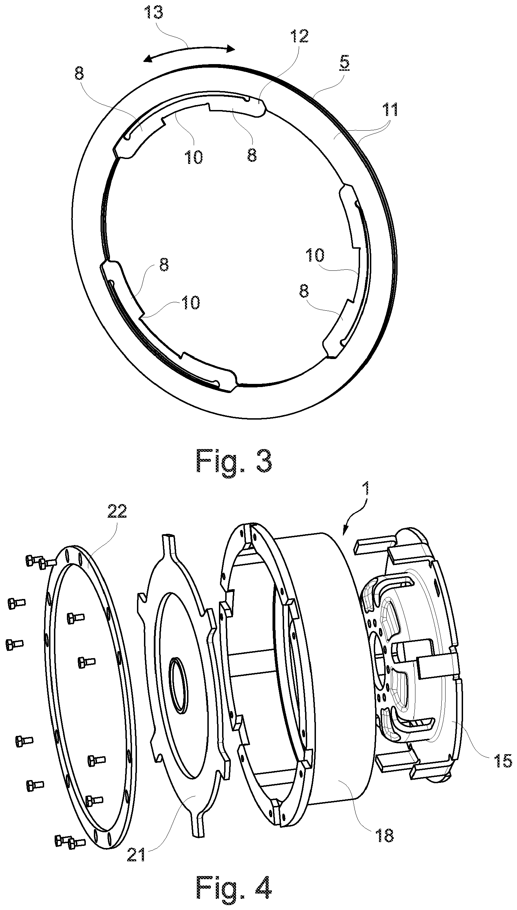

Fig. 3 zeigt ein Beispiel einer als Innenlamelle 4 einsetzbaren Belaglamelle 5. Diese weist zwei Reiblamellen 11 auf, die auf gegenüberliegenden Seiten eines Belagträgers 12 ausgebildet sind. Die Belaglamelle 5 weist vorzugsweise drei Blattfedern 8 auf. Die Blattfedern 8 sind einteilig mit dem Belagträger 12 ausgebildet, indem beide in Umfangsrichtung 13 voneinander beabstandeten Enden einer jeden Blattfeder 8 in den Belagträger 12 übergehen. Jede Blattfeder 8 weist eine Ausnehmung 10 auf, deren Funktion weiter unten erläutert wird.

Im Folgenden wird wieder auf Fig. 1 Bezug genommen. Die Lamellenkupplung 1 weist ferner einen Mitnehmerkranz 14 auf, an dem die Innenlamellen 4 drehmomentübertragend eingehängt sind. Die Außenlamellen 5 sind an einem Rotor-Topf 15 eingehängt. Im Betrieb kann im eingerückten Zustand der Lamellenkupplung 1 Drehmoment zwischen Mitnehmerkranz 14 über die Innenlamellen 4 und die Außenlamellen 5 auf den Rotor-Topf 15 übertragen werden und umgekehrt, je nachdem, ob ein Zug- oder Schubbetrieb vorliegt. Der Rotor-Topf 15 weist mehrere Arme 16 auf, die sich vom Rotor-Topf in axialer Richtung 6 erstrecken. Diese Arme 16, von denen beispielsweise drei pro Rotor-Topf 15 ausgebildet sind, haben dabei mehrere Funktionen. Durch Zusammenwirken mit entsprechenden axialen Nuten 17 eines Rotor-Trägers 18, in die die Arme 16 eingeschoben werden, kann Drehmoment zwischen Rotor-Topf 15 und Rotor-Träger 18 übertragen werden. Weiterhin dienen die Arme 16 der Lagerung der Außenlamellen 5, in dem sie mit den Ausnehmungen 10 der Blattfedern 8 der Außenlamellen 5 zusammenwirken (vgl. Fig. 2).

Im eingerückten Zustand erfolgt die Drehmomenteinleitung bzw. -ausleitung über die Ausnehmungen 10. Um sowohl im Schub- als auch im Zugbetrieb eine Drehmomentübertragungen zu ermöglichen, sind die Ausnehmungen 10 U-förmig ausgebildet, so dass sich in beide Umfangsrichtungen 13 eine entsprechende Anlagefläche ergibt. Alternativ können die Ausnehmungen 10 auch O-förmig ausgebildet werden.

Beim Einrücken der Lamellenkupplung erfolgt eine Relativbewegung zwischen Innenlamellen 4 und Mitnehmerkranz 14 bzw. zwischen Außenlamellen 2 und Rotor-Träger 18, die beispielsweise über einen Drucktopf 19 erfolgt. Durch die Blattfedern 8 wird bereits bei minimaler Reibung bei der Relativbewegung eine relativ große axiale Bewegung der entsprechenden Innenlamelle 4 und Außenlamelle 2 erzeugt, eine Gleitbewegung beispielsweise zwischen dem Belagträger 12 und den entsprechenden Blattfederführungen 20 wird vermieden. Analog bewirkt bereits das Vorliegen einer kleinen Reibung bei der Relativbewegung zwischen Armen 16 und Ausnehmungen 10 eine deutlich größere Bewegung der Außenlamelle 2 in axialer Richtung 6 erfolgt. Auch hier wird eine Gleitbewegung zwischen Armen 16 und Ausnehmungen 10 vermieden. Weiterhin weist die Lamellenkupplung 1 eine Anpressplatte 21 auf, die die Anpresskraft abstützt. Die Anpressplatte 21 ist dabei mit dem Rotor-Träger 18 verschraubt. Weiterhin umfasst die Lamellenkupplung 1 einen Montagering 22 zur Fixierung der Anpressplatte 21 am Rotor-Träger 18.

Fig. 4 zeigt eine weitere Ansicht der Lamellenkupplung 1 mit Montagering 22, Anpressplatte 21, Rotor-Träger 18 und Rotor-Topf 15.

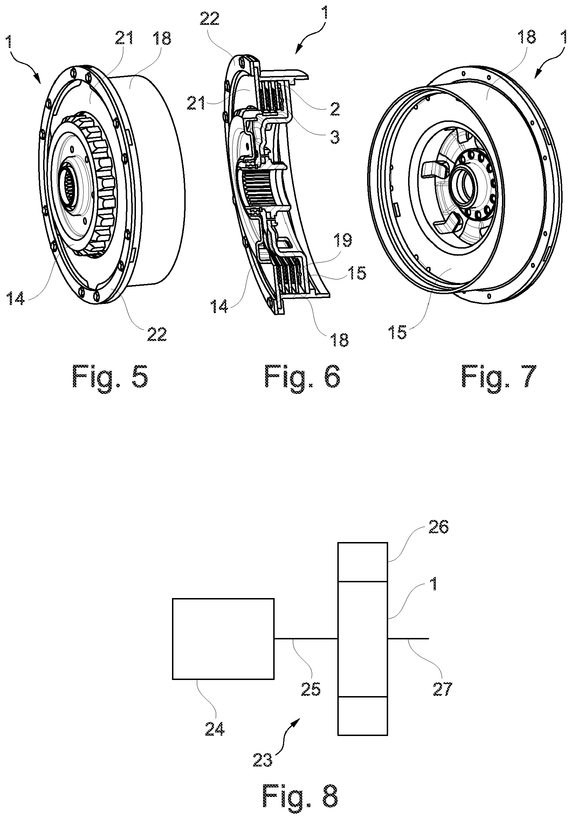

Fig. 5 bis 7 zeigen verschiedene perspektivische Ansichten der montierten Lamellenkupplung 1. Es wird auf die oben gemachten Ausführungen verwiesen.

Fig. 8 zeigt schematisch einen hybriden Antriebsstrang 23 insbesondere eines Kraftfahrzeuges mit einem Verbrennungsmotor 24, der über eine Kurbelwelle 25 mit der Lamellenkupplung 1 verbunden ist, die hier als K0- oder Trennkupplung zum Trennen und Verbinden des Verbrennungsmotors 24 vom hybriden Antriebsstrang 23 ausgebildet ist. Die Lamellenkupplung 1 ist konzentrisch mit einer elektrischem Maschine 26 ausgebildet. Über eine Ausgangswelle 27 kann Drehmoment auf die nicht gezeigten Räder des Kraftfahrzeuges übertragen werden. Die Ausgangswelle 27 ist dabei mit der Lamellenkupplung 1 und der elektrischen Maschine 26 verbindbar. Die Lamellenkupplung 1 ist insbesondere in einen Rotor der elektrischen Maschine 26 integriert. Die elektrische Maschine 26 ist dabei bevorzugt ein Elektromotor und/oder ein elektrischer Generator.

Die Anordnung von Stahllamellen 3 und Belaglamellen 5 kann prinzipiell in beide Richtungen erfolgen (innen und außen). In der vorliegenden Beschreibung wird jedoch nur auf den Fall eingegangen, dass die Belaglamellen (vgl. Fig. 3) innen liegen (Innenlamellen 4) und somit das Motormoment vom Mitnehmerkranz14) aufnehmen und auf die außenliegenden Stahllamellen 3 (Außenlamellen 2) (Fig.2) übertragen. Dies geschieht über ein Trägerblech (Belagträger 12), das jeweils zwischen zwei Belägen (Reiblamellen 11) zu einer sogenannten Belaglamelle 5 (vgl. Fig.3) verklebt wird. Im Trägerblech (Belagträger 12) befinden sich mindestens drei Federelemente (Blattfedern 8) mit innenliegenden Aussparungen (Ausnehmungen 10) in Umfangsrichtung 13. In diesen Aussparungen (Ausnehmungen 10) wird das Moment auf das Trägerblech (Belagträger 12) und damit die Reiblamellen 11 eingeleitet. Das Moment kann dabei in beide Richtungen übertragen werden, da eine U-förmiger Kontakt (möglich wäre je nach Bauraumverhältnissen auch ein O-förmiger Kontakt) vorhanden ist. Die Federelemente (Blattfedern 8) sollten eine möglichst geringe axiale Steifigkeit aufweisen, um bereits bei minimaler Verschiebereibung eine axiale Bewegung der Lamelle zu ermöglichen. Dadurch wird eine Gleitbewegung zwischen Trägerblech (Belagträger 12) und Blattfederführung 20 vermieden.

Die Stahllamelle 3 wird nach außen hin in ähnlicher Weise gelagert. Die Federelemente (Blattfedern 8) sind als einzelne Blattfedern 8 ausgeführt und auf der jeweiligen Stahllamelle 3 vernietet (vgl. die Hohlnieten 9 in Fig. 3). Ein Verkleben auf dem Trägerblech (Belagträger 12) erscheint jedoch auch möglich.

Je nach Anforderung und notwendiger Momentenkapazität kann die Kupplung (Lamellenkupplung 1) aus mehreren hintereinandergeschalteten Lamellenpaketen bestehen.

Betätigt wird die Kupplung (Lamellenkupplung 1) am effektivsten ohne Übersetzung, also direkt über einen Drucktopf 19 vom Ausrücklager. Es ist jedoch auch möglich mithilfe einer Tellerfeder oder Hebelfeder eine Übersetzung zu generieren.

Die Anpresskraft wird am gegenüberliegenden axialen Ende durch eine an den Rotor-Träger 18 verschraubte Anpressplatte 21 abgestützt. Dies erspart eine Schweißnaht zwischen Rotor-Topf 15 und Rotor-Träger 18 und ermöglicht gleichzeitig eine einfache Montage/Demontage der Lamellen.

Zur Momentenübertragung zwischen Rotor-Topf 15 und Rotor-Träger 18 sind axiale Nuten 17 am Innendurchmesser des Rotor-Trägers 18 eingebracht. Durch diese verlaufen entsprechende Arme 16 des Rotor-Topfes 15, die gleichzeitig auch zur Lagerung der Stahllamellen-Blattfedern (Blattfedern 8 der Stahllamellen 3) dienen.

### Bezugszeichenliste

- 1: Lamellenkupplung
- 2: Außenlamelle
- 3: Stahllamelle
- 4: Innenlamelle
- 5: Belaglamelle
- 6: Axiale Richtung
- 7: Radiale Richtung
- 8: Blattfeder
- 9: Hohlniet
- 10: Ausnehmung
- 11: Reiblamelle
- 12: Belagträger
- 13: Umfangsrichtung
- 14: Mitnehmerkranz
- 15: Rotor-Topf
- 16: Arm
- 17: Nut
- 18: Rotor-Träger
- 19: Drucktopf
- 20: Blattfederführung
- 21: Anpressplatte
- 22: Montagering
- 23: Hybrider Antriebstrang
- 24: Verbrennungsmotor
- 25: Kurbelwelle
- 26: Elektrische Maschine
- 27: Ausgangswelle

## Patentansprüche

1. Lamellenkupplung (1), insbesondere trockene Lamellenkupplung, insbesondere für einen hybriden Antriebsstrang (23), mit zumindest einer in radialer Richtung (7) außen eingehängten und in axialer Richtung (6) verschiebbaren Außenlamelle (2) und zumindest einer in radialer Richtung (7) innen eingehängten und in axialer Richtung (6) verschiebbaren Innenlamelle (4),
wobei die Außenlamelle (2) über eine Mehrzahl im Außenumfang verteilt angeordneter Blattfedern (8) drehmomentübertragend an einem Rotor-Topf (15) eingehängt ist und/oder die Innenlamellen (2) über eine Mehrzahl im Innenumfang verteilt angeordneter Blattfedern (8) drehmomentübertragend an einem Mitnehmerkranz (14) eingehängt ist,
**dadurch gekennzeichnet, dass** mindestens zwei der Blattfedern (8) einteilig mit einem Belagträger (12) einer innen oder außen eingehängten Belaglamelle (5) ausgebildet sind, indem beide in Umfangsrichtung (13) voneinander beabstandeten Enden einer jeden Blattfeder (8) in den Belagträger (12) übergehen.

2. Lamellenkupplung (1) nach Anspruch 1, bei der die mindestens eine Außenlamelle (2) als Stahllamelle(n) (3) und die mindestens eine Innenlamelle (4) als Belaglamelle(n) (5) ausgebildet sind.

3. Lamellenkupplung (1) nach Anspruch 1, bei der die mindestens eine Außenlamelle (2) als Belaglamelle(n) (5) und die mindestens eine Innenlamelle (4) als Stahllamelle(n) (3) ausgebildet sind.

4. Lamellenkupplung (1) nach einem der vorhergehenden Ansprüche, wobei mindestens zwei weitere Blattfedern (8) mit einer außen oder innen eingehängten Stahllamelle (3) verbunden, vorzugsweise vernietet, sind, indem beide in Umfangsrichtung (13) voneinander beabstandeten Enden einer jeden Blattfeder (8) mit der Stahllamelle (3) verbunden, vorzugsweise vernietet, sind.

5. Lamellenkupplung (1) nach einem der vorherigen Ansprüche, bei der die Blattfedern (8) an der Außenlamelle (2) und/oder der Innenlamelle (4) in Umfangsrichtung (13) gleichmäßig verteilt sind.

6. Lamellenkupplung (1) nach einem der vorherigen Ansprüche, bei der pro Außenlamelle (2) oder Innenlamelle (4) mindestens drei Blattfedern (8) ausgebildet sind.

7. Lamellenkupplung (1) nach einem der vorhergehenden Ansprüche, bei der ein Rotor-Träger (15) ausgebildet ist, der in radialer Richtung (7) innen axiale Nuten (17) aufweist, in die entsprechende Arme (16) des Rotor-Topfes (15) eingreifen.

8. Lamellenkupplung (1) nach Anspruch 7, bei der die Arme (16) des Rotor-Topfes (15) zur Lagerung der Blattfedern (8) der Außenlamellen (2) dienen, wobei die Blattfedern (8) zu den Armen (16) korrespondierende Ausnehmungen (10) aufweisen.

9. Hybrider Antriebsstrang (23) mit einer Lamellenkupplung (1) nach einem der vorhergehenden Ansprüche, die als K0-Kupplung zum An- und Abkoppeln eines Verbrennungsmotors (24) ausgebildet ist, und/oder die in den Rotor einer elektrischen Maschine (26), wie eines Elektromotors oder eines Generators, integriert ist.

## Claims

1. A multi-plate clutch (1), in particular a dry multi-plate clutch for a hybrid drivetrain (23), having at least one outer plate (2) suspended on the outside in the radial direction (7) and displaceable in the axial direction (6) and at least one inner plate (4) suspended on the inside in the radial direction (7) and displaceable in the axial direction (6),
wherein the outer plate (2) is suspended on the rotor pot (15) in a torque-transmitting manner via a plurality of leaf springs (8) distributed around the outer circumference and/or the inner plate (2) is suspended on a driver ring (14) via a plurality of leaf springs (8) distributed around the inner circumference in a torque-transmitting manner, **characterised in that** at least two of the leaf springs (8) are integrally formed with a lining carrier (12) of an internally or externally suspended lining plate (5), **in that** both ends of each leaf spring (8), which are spaced apart from one another in the circumferential direction (13), merge into the lining carrier (12).

2. The multi-plate clutch (1) according to claim 1, in which the at least one outer plate (2) is designed as (a) steel plate(s) (3) and the at least one inner plate (4) is designed as (a) lining plate(s) (5).

3. The multi-plate clutch (1) according to claim 1, in which the at least one outer plate (2) is designed as (a) lining plate(s) (5) and the at least one inner plate (4) is designed as (a) steel plate(s) (3).

4. The multi-plate clutch (1) according to one of the preceding claims, wherein at least two further leaf springs (8) are connected, preferably riveted, to an outer or inner suspended steel plate (3), in that both ends of each leaf spring (8), which are spaced apart from one another in the circumferential direction (13), are connected, preferably riveted, to the steel plate (3).

5. The multi-plate clutch (1) according to one of the preceding claims, in which the leaf springs (8) are evenly distributed on the outer plate (2) and/or the inner plate (4) in the circumferential direction (13).

6. The multi-plate clutch (1) according to one of the preceding claims, in which at least three leaf springs (8) are formed per outer plate (2) or inner plate (4).

7. The multi-plate clutch (1) according to one of the preceding claims, in which a rotor carrier (15) is formed, having axial grooves (17) on the inside in the radial direction (7), in which the corresponding arms (16) of the rotor pot (15) engage.

8. The multi-plate clutch (1) according to claim 7, in which the arms (16) of the rotor pot (15) support the leaf springs (8) of the outer plates (2), wherein the leaf springs (8) have recesses (10) corresponding to the arms (16).

9. A hybrid drivetrain (23) having a multi-plate clutch (1) according to one of the preceding claims, which is designed as a K0 clutch for coupling and uncoupling an internal combustion engine (24), and/or is integrated into the rotor of an electric machine (26), such as an electric motor or a generator.

## Revendications

1. Embrayage multidisque (1), en particulier embrayage multidisque sec, en particulier pour une chaîne cinématique hybride (23), comportant au moins un disque extérieur (2) accroché à l'extérieur dans la direction radiale (7) et coulissant dans la direction axiale (6) et un disque intérieur (4) accroché à l'intérieur dans la direction radiale (7) et coulissant dans la direction axiale (6),
le disque extérieur (2) étant accroché à un pot de rotor (15) par l'intermédiaire d'une pluralité de ressorts à lames (8) répartis sur la périphérie extérieure de manière à transmettre le couple et/ou le disque intérieur (2) est accroché à une couronne d'entraînement (14) par l'intermédiaire d'une pluralité de ressorts à lames (8) répartis sur la périphérie intérieure de manière à transmettre le couple, **caractérisé en ce qu'**au moins deux des ressorts à lames (8) sont réalisés d'une seule pièce avec un support de garniture (12) d'un disque de garniture (5) accroché à l'intérieur ou à l'extérieur, **en ce que** les deux extrémités d'un tel ressort à lames (8) espacées l'une de l'autre dans la direction périphérique (13) se prolongent dans le support de garniture (12).

2. Embrayage multidisque (1) selon la revendication 1, dans lequel l'au moins un disque extérieur (2) est réalisé sous la forme d'un ou plusieurs disques d'acier (3) et l'au moins un disque intérieur (4) est réalisé sous la forme d'un ou plusieurs disques de garniture (5).

3. Embrayage multidisque (1) selon la revendication 1, dans lequel l'au moins un disque extérieur (2) est réalisé sous la forme d'un ou plusieurs disques de garniture (5) et l'au moins un disque intérieur (4) est réalisé sous la forme d'un ou plusieurs disques d'acier (3).

4. Embrayage multidisque (1) selon l'une quelconque des revendications précédentes, dans lequel au moins deux autres ressorts à lames (8) sont reliés à un disque d'acier (3) accroché à l'extérieur ou à l'intérieur, de préférence rivetés, en ce que les deux extrémités d'un tel ressort à lames (8) espacées l'une de l'autre dans la direction périphérique (13) sont reliées, de préférence rivetées, au disque d'acier (3).

5. Embrayage multidisque (1) selon l'une quelconque des revendications précédentes, dans lequel les ressorts à lames (8) sont répartis uniformément sur le disque extérieur (2) et/ou le disque intérieur (4) dans la direction périphérique (13).

6. Embrayage multidisque (1) selon l'une quelconque des revendications précédentes, dans lequel au moins trois ressorts à lames (8) sont réalisés par disque extérieur (2) ou disque intérieur (4).

7. Embrayage multidisque (1) selon l'une quelconque des revendications précédentes, dans lequel un support de rotor (15) est réalisé, qui présente dans la direction radiale (7) des rainures axiales intérieures (17), dans lesquelles viennent en prise les bras (16) correspondants du pot de rotor (15).

8. Embrayage multidisque (1) selon la revendication 7, dans lequel les bras (16) du pot de rotor (15) servent à loger les ressorts à lames (8) du disque extérieur (2), les ressorts à lames (8) présentant des évidements (10) correspondant aux bras (16).

9. Chaîne cinématique hybride (23) comportant un embrayage multidisque (1) selon l'une quelconque des revendications précédentes, qui est réalisé sous la forme d'un embrayage K0 pour l'accouplement et le désaccouplement d'un moteur à combustion interne (24) et/ou qui est intégré dans le rotor d'une machine électrique (26), comme un moteur électrique ou un générateur.
